# DEMANDE DE BREVET EUROPEEN

(11) **EP 1 201 956 A1**
(43) Date de publication de la demande: **02.05.2002**
(21) Numéro de dépôt: 01402392.3
(22) Date de dépôt: 18.09.2001
(51) Int. Cl.: F16D 55/22

(54) **Ecran de protection de disque de frein**

(30) Priorité: 25.10.2000 FR 0013693
(71) Demandeur: Delphi Technologies, Inc., Troy, MI 48098 (US)
(72) Inventeur: Frouin, Thierry, 91210 Draveil (FR)
(74) Mandataire: Habasque, Etienne Joel Jean-François

(57) **Abrégé**

Un écran de protection de disque de frein d'un véhicule routier comporte au moins un organe élastique (27;30) de maintien destiné à être comprimé dans un intervalle axial entre un porte-pivot (11) et un module de roulement (13), présent après serrage direct du module de roulement (13) sur le porte-pivot (11).

Un ensemble pour le raccordement à rotation d'une roue à un véhicule routier comporte un porte-pivot (11) et un module de roulement serrés directement l'un sur l'autre, ainsi qu'un tel écran de protection (12) maintenu en place du fait de la compression de l'organe élastique (27;30).

## Description

L'invention concerne un écran de protection de disque de frein.

L'invention concerne également un ensemble pour le raccordement à rotation d'une roue à un véhicule routier, comportant un tel écran.

Un tel ensemble comporte un porte-pivot destiné à être monté sur le véhicule, un module de roulement et, disposé entre eux, un écran de protection encore appelé pare-boue. Le module de roulement est destiné à recevoir la roue et, intercalé entre elle et ce module de roulement, un disque de frein que l'écran de protection a pour fonction de protéger.

Une première solution pour l'assemblage de ces éléments consiste à serrer ensemble le porte-pivot, l'écran de protection et le module de roulement au moyen de vis axiales. Comme, dans cette disposition, le porte-pivot et le module de roulement ne portent pas directement l'un contre l'autre, l'écran de protection étant interposé entre eux, la précision avec laquelle les axes respectifs du porte-pivot et du module de roulement sont alignés l'un avec l'autre est dégradée. Or, dans le cas où le module de roulement est destiné à recevoir une roue supportant un véhicule routier, cette précision revêt une importance particulière. Aussi, certains constructeurs d'automobile rejettent cette première solution.

Une deuxième solution consiste à serrer directement l'un contre l'autre, le porte-pivot et le module de roulement, l'écran de protection étant monté séparément sur le porte-pivot, soit au moyen de vis supplémentaires, soit en étant emmanché à force sur une surface usinée de l'une de ces pièces.

Par rapport à la première solution, cette seconde solution nécessite des opérations supplémentaires, à savoir dans un cas, le perçage des trous destinés à recevoir les vis de fixation de l'écran de protection et le vissage ou le boulonnage de celles-ci, ou, dans l'autre cas, l'usinage d'une surface et l'emmanchement à force de l'écran de protection. De telles opérations consomment du temps et utilisent des machines. Par conséquent, elles présentent un coût, tout comme les vis supplémentaires utilisées dans un de ces deux cas pour fixer l'écran de protection.

L'invention a donc pour but de réduire le nombre d'opérations et/ou le nombre de composants nécessaires au montage d'un écran de protection sur un ensemble dans lequel un module de roulement et un porte-pivot sont assemblés par serrage direct l'un contre l'autre.

A cet effet, l'invention a pour objet un écran de protection de disque de frein d'un véhicule routier, comprenant une plaque annulaire destinée à être associée à un porte-pivot et à un module de roulement de montage d'une roue du véhicule, caractérisé en ce qu'il comporte au moins un organe élastique de maintien par compression dans un intervalle axial entre le porte-pivot et le module de roulement, présent après serrage du module de roulement sur le porte-pivot.

Suivant d'autres caractéristiques :
- la partie centrale de l'écran est plane à l'exception de l'organe élastique qui s'écarte progressivement du plan de cette partie centrale ;
- l'organe élastique est formé d'une lame flexible délimitée par le bord d'une ouverture centrale de l'écran de protection et par deux fentes débouchant dans ladite ouverture centrale ;
- l'organe élastique est formé par une saillie du matériau de l'écran ;
- il compote deux languettes radiales d'appui associées à l'organe élastique et disposées chacune d'un côté de cet organe élastique ;
- il comporte plusieurs organes élastiques répartis autour de l'ouverture centrale de la plaque ;
- il est réalisé par emboutissage d'une tôle mince.

L'invention a également pour objet un ensemble pour le raccordement à rotation d'une roue à un véhicule routier, comportant un porte-pivot destiné à être monté sur le véhicule et un module de roulement destiné à recevoir un disque de frein et la roue, le porte-pivot et le module de roulement étant assemblés par serrage direct de l'un sur l'autre, caractérisé en ce qu'il comporte un écran de protection du type défini plus haut, au moins deux surfaces, chacune formant mors, situées respectivement sur le porte-pivot et sur le module de roulement définissant ensemble, après serrage direct du module de roulement sur le porte-pivot, une mâchoire de serrage et de maintien de l'organe élastique de l'écran de protection.

Suivant encore d'autres caractéristiques :
- lesdits mors portent l'un sur la partie centrale plane et l'autre sur l'organe élastique dudit écran ;
- le module de roulement présente un bloc axial de centrage logé dans un alésage axial de forme complémentaire, réalisé dans le porte-pivot et l'ensemble comporte plusieurs mâchoires serrant chacune un organe élastique correspondant dudit écran de protection ;
- les surfaces d'extrémité desdites languettes radiales d'appui, formant chacune organe de centrage, s'appliquent sur la surface périphérique du bloc de centrage en divers endroits répartis tout autour de celui-ci ;
- les mors de ladite au moins une mâchoire sont l'un situé dans le plan de serrage par contact direct du porte-pivot et du module de roulement et l'autre décalé par rapport à ce plan de serrage ;
- l'ouverture centrale comporte des échancrures pour le passage de bossages, qui sont soit formés sur le porte-pivot et serrés directement sur le module de roulement, soit formés sur le module de roulement et serrés directement sur le porte-pivot.

L'invention sera mieux comprise à la lecture de la description qui va suivre, donnée uniquement à titre d'exemple et faite en se référant aux dessins annexés, sur lesquels :
- la Fig.1 est une vue éclatée d'un ensemble de l'art antérieur, destiné au raccordement à rotation d'une roue à un véhicule automobile ;
- la Fig.2 est une vue éclatée d'un ensemble conforme à l'invention, pour le raccordement à rotation d'une roue à un véhicule routier ;
- la Fig.3 est un médaillon illustrant un détail de l'écran de protection, délimité par le cercle III de la figure 2 et agrandi ;
- la Fig.4 est une demi-vue en coupe selon le demi-plan P1 de la figure 2, l'ensemble étant assemblé ;
- les Figs.5 et 5A sont respectivement une demi-vue en coupe selon le demi-plan P2 de la figure 2, l'ensemble étant assemblé et un agrandissement d'un détail ; et
- la Fig.6 est un médaillon analogue à celui de la figure 3 illustrant une variante de réalisation de l'invention.

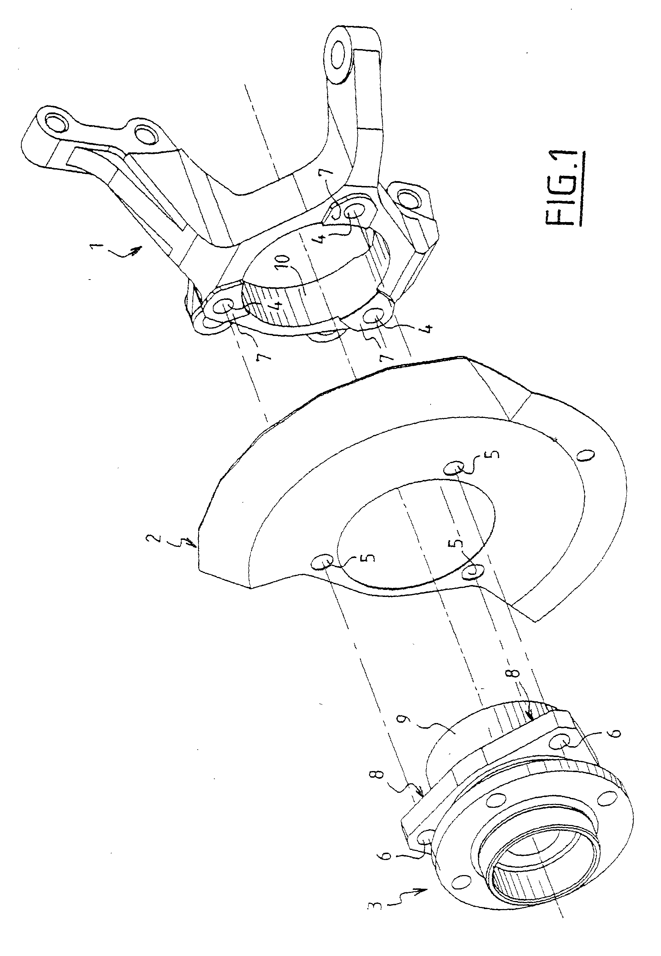

Sur la figure 1, dans une vue éclatée, est représenté un ensemble de l'art antérieur, destiné au raccordement à pivotement d'une roue à un véhicule routier. Cet ensemble se compose d'un porte-pivot 1, d'un écran de protection 2 ou pare-boue et d'un module de roulement 3, qui sont chacun percés de trois trous, repérés, sur le porte-pivot 1, l'écran de protection 2 et le module de roulement 3, respectivement par les indices 4,5 et 6, pour le passage de trois vis (non représentées) maintenant assemblé, par serrage, cet ensemble.

Dans cette disposition, l'écran de protection 2 se trouve serré entre des surfaces de serrage 7 et 8, situées respectivement sur le porte-pivot 1 et le module de roulement 3, lesquelles surfaces, de ce fait, ne portent pas directement l'une contre l'autre. Ceci nuit à l'alignement, que l'on souhaite aussi précis que possible, des axes respectifs du porte-pivot 1 et du module de roulement 3, malgré la présence, sur le module de roulement 3, d'un bloc de centrage 9 venant se loger dans un alésage 10 de forme complémentaire, réalisé sur le porte-pivot 1.

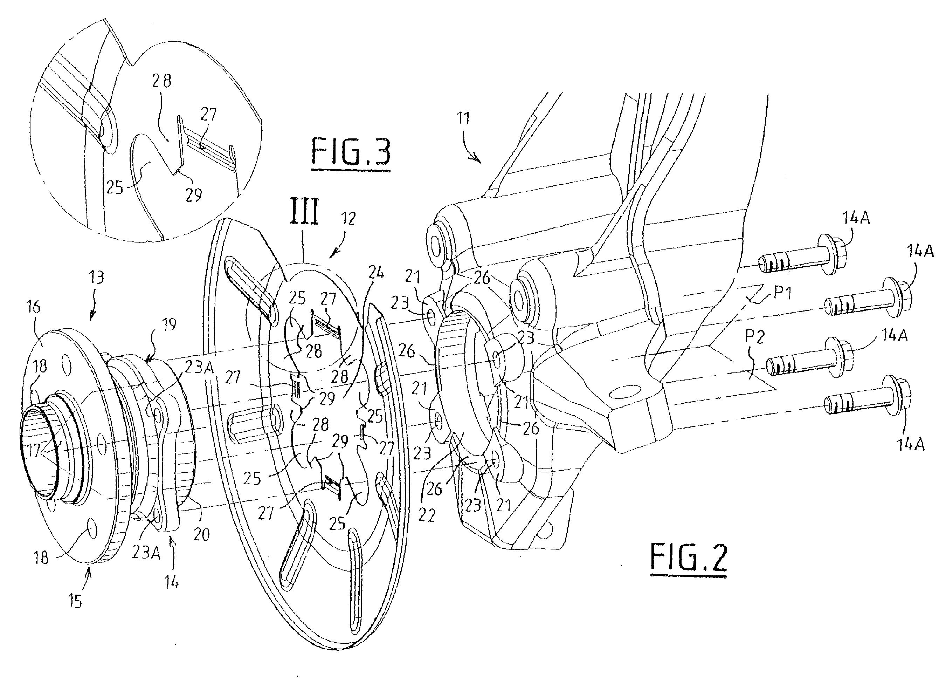

Les figures 2 à 5 représentent un ensemble conforme à l'invention, pour le raccordement à rotation d'une roue à un véhicule routier, destiné à remédier aux inconvénients respectifs des dispositifs connus. Il comporte trois éléments, à savoir un porte-pivot 11, un écran de protection 12 et un module de roulement 13 destinés à être assemblés au moyen de quatre vis 14A.

Le porte-pivot 11 dont, pour des raisons de clarté, seule la partie inférieure a été représentée sur la figure 2, est destiné à être monté sur un véhicule. Le module de roulement 13 comporte, un élément 14 fixe destiné à être rigidement assemblé avec le porte-pivot 11 et un élément tournant 15, formé d'un disque 16 et d'un moyeu 17 coaxiaux, et apte à recevoir un disque de frein et une roue (tous deux non représentés), des trous de fixation 18 étant prévu dans le disque 16 pour fixer ceux-ci. L'écran de protection 12, pièce d'un seul tenant formé par emboutissage d'une tôle mince, a pour fonction de protéger contre tout type de projection le disque de frein monté entre la roue et le module de roulement 13.

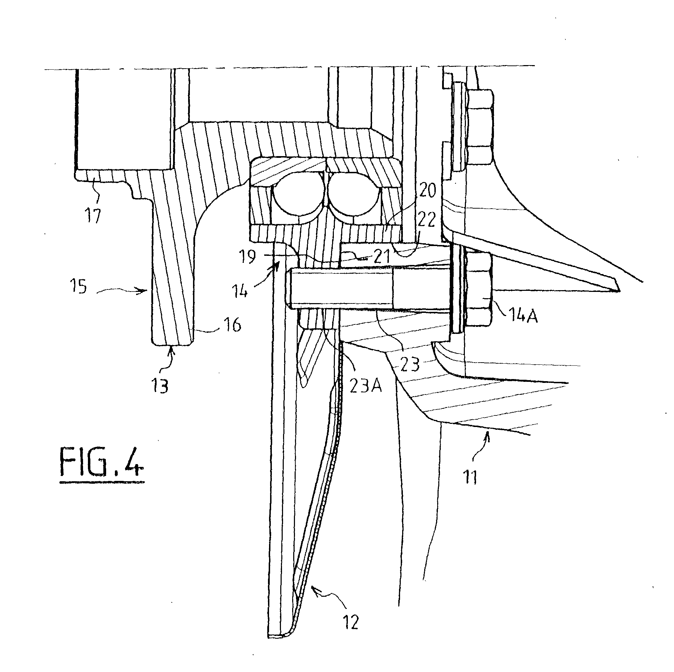

Sur l'élément fixe 14 du module de roulement 13, une surface radiale plane 19, tournée vers le porte-pivot 11, s'étend à partir d'un bloc de centrage 20, axial et de forme cylindrique, et forme ainsi un épaulement. Quatre surfaces de serrage 21 portées respectivement par quatre bossages du porte-pivot 11 et régulièrement réparties tout autour d'un alésage axial 22 recevant le bloc de centrage 20, sont directement serrées contre la surface radiale 19 au moyen des vis 14A, comme on peut le voir sur la figure 4. A cet effet, chacune de ces surfaces de serrage 21, est pourvue en son centre d'un trou 23 recevant la tige d'une vis 14A dont l'extrémité filetée est vissée dans un trou 23A taraudé, percé quant à lui dans l'élément fixe 14 du module de roulement 13. Le serrage des surfaces de serrage 21 directement contre la surface radiale 19, et la coopération étroite du bloc de centrage 20 et de l'alésage axial 22 réalisent conjointement un alignement de qualité des axes respectifs du module de roulement 13 et du porte-pivot 11.

L'écran de protection 12, disposé entre le module de roulement 13 et le porte-pivot 11, est percé d'une ouverture centrale 24 entourant le bloc de centrage 20, le contour de cette ouverture 24 délimitant également quatre échancrures 25 permettant le passage des bossages portant les surfaces de serrage 21.

A la périphérie de l'alésage axial 22, le porte-pivot 11 présente des surfaces 26 formant mors, qui sont séparées les unes des autres par les surfaces de serrage 21 et se situent en retrait par rapport à ces dernières de manière à former avec la surface radiale 19, des paires de mors qui s'étendent en vis-à-vis à l'écart les uns des autres et forment mâchoires, lorsque ce porte-pivot 11 et le module de roulement 13 sont assemblés par serrage l'un contre l'autre.

La partie centrale de l'écran de protection 12, comprenant l'ouverture 24 est plane, à l'exception de quatre lames flexibles 27 formant organes élastiques, disposées entre deux échancrures 25 consécutives. Les lames flexibles 27, particulièrement visibles sur la figure 3, sont délimitées par le bord de l'ouverture centrale 24 et par deux fentes débouchant dans celle-ci, et s'écartent progressivement de cette portion centrale plane. De chaque côté de chacune des lames flexibles 27, s'étend une languette radiale 28.

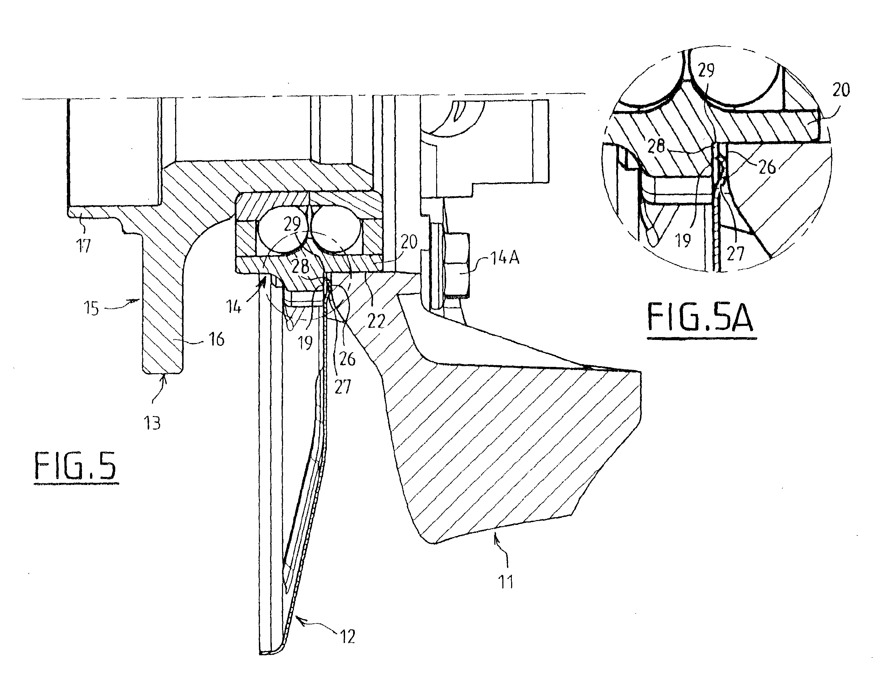

De manière visible sur les figures 5 et 5A, les languettes 28 définissent des surfaces d'appui qui sont pressées sur la surface radiale 19 du module de roulement 13 au moyen de la lame flexible 27 sollicitée en flexion par la surface 26, formant mors, du porte-pivot, ce qui assure le maintien en place de l'écran de protection 12.

Les surfaces d'extrémité 29 de ces languettes 28 s'appliquent sur le bloc de centrage 20, en divers endroits répartis tout autour de celui-ci, de manière à centrer en position l'écran de protection 12.

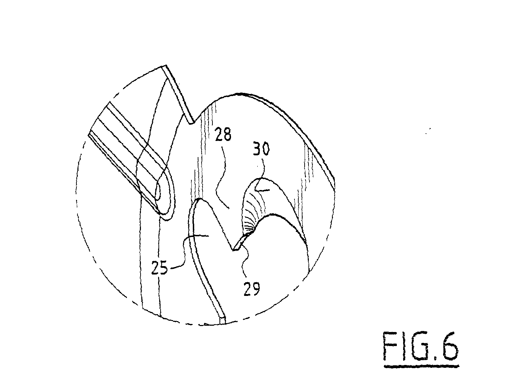

La figure 6 illustre une variante de réalisation de l'invention, dans laquelle les lames flexibles 27, formant chacune organe élastique, sont remplacées par des saillies 30 formées lors de l'emboutissage de l'écran de protection 12 et situées sur le bord de l'ouverture centrale 24.

L'invention ne se limite pas aux modes de réalisation précédemment décrits. En particulier, on peut faire varier le nombre, la disposition et la forme notamment des surfaces de serrage 21, des surfaces 26 formant mors, des lames flexibles 27, des languettes 28, des échancrures 25 et des vis 14A, sans sortir du cadre de l'invention.

Bien qu'il soit avantageux de réaliser l'écran de protection par emboutissage d'une tôle mince, celui-ci peut également être fabriqué au moyen d'une autre technique adaptée à l'utilisation d'un autre matériau. Cet écran de protection peut, par exemple, être obtenu par moulage d'une matière synthétique.

## Revendications

1. Ecran de protection de disque de frein d'un véhicule routier, comprenant une plaque annulaire destinée à être associée à un porte-pivot (11) et à un module de roulement (13) de montage d'une roue du véhicule, **caractérisé en ce qu'**il comporte au moins un organe élastique (27;30) de maintien par compression dans un intervalle axial entre le porte-pivot (11) et le module de roulement (13), présent après serrage du module de roulement (13) sur le porte-pivot (11).

2. Ecran de protection selon la revendication 1, **caractérisé en ce que** sa partie centrale est plane à l'exception de l'organe élastique (27;30) qui s'écarte progressivement du plan de cette partie centrale.

3. Ecran de protection selon la revendication 2, **caractérisé en ce que** l'organe élastique est formé d'une lame flexible (27) délimitée par le bord d'une ouverture centrale (24) de l'écran de protection et par deux fentes débouchant dans ladite ouverture centrale (24).

4. Ecran de protection selon la revendication 2, **caractérisé en ce que** l'organe élastique est formé par une saillie (30) du matériau de l'écran.

5. Ecran de protection selon la revendication 3 ou 4, **caractérisé en ce qu'**il compote deux languettes radiales d'appui (28) associées à l'organe élastique (27;30) et disposées chacune d'un côté de cet organe élastique (27;30).

6. Ecran de protection selon l'une quelconque des revendications précédentes, **caractérisé en ce qu'**il comporte plusieurs organes élastiques (27;30) répartis autour de l'ouverture centrale (24) de la plaque.

7. Ecran de protection selon l'une quelconque des revendications précédentes, **caractérisé en ce qu'**il est réalisé par emboutissage d'une tôle mince.

8. Ensemble pour le raccordement à rotation d'une roue à un véhicule routier, comportant un porte-pivot (11) destiné à être monté sur le véhicule et un module de roulement (13) destiné à recevoir un disque de frein et la roue, le porte-pivot (11) et le module de roulement (13) étant assemblés par serrage direct de l'un sur l'autre, **caractérisé en ce qu'**il comporte un écran de protection (12) selon l'une quelconque des revendications précédentes, au moins deux surfaces (26,19), chacune formant mors, situées respectivement sur le porte-pivot (11) et sur le module de roulement (13) définissant ensemble, après serrage direct du module de roulement (13) sur le porte-pivot (11), une mâchoire de serrage et de maintien de l'organe élastique (27;30) de l'écran de protection (12).

9. Ensemble selon la revendication 8, **caractérisé en ce qu'**il comporte un écran de protection selon l'une quelconque des revendications 2 à 5, lesdits mors portant l'un sur la partie centrale plane et l'autre sur l'organe élastique (27;30) dudit écran.

10. Ensemble selon la revendication 8 ou 9, dans lequel le module de roulement (13) présente un bloc axial de centrage (20) logé dans un alésage axial (22) de forme complémentaire, réalisé dans le porte-pivot (11), **caractérisé en ce qu'**il comporte un écran de protection (12) selon la revendication 6 et plusieurs mâchoires serrant chacune un organe élastique (27;30) correspondant dudit écran de protection (12).

11. Ensemble selon la revendication 10, **caractérisé en ce qu'**il comporte un écran de protection (12) selon les revendications 5 et 6, les surfaces d'extrémité (29) desdites languettes radiales d'appui (28), formant chacune organe de centrage, s'appliquant sur la surface périphérique du bloc de centrage (20) en divers endroits répartis tout autour de celui-ci.

12. Ensemble selon l'une quelconque des revendications 8 à 11, **caractérisé en ce que** les mors de ladite au moins une mâchoire sont l'un situé dans le plan de serrage par contact direct du porte-pivot (11) et du module de roulement (13) et l'autre décalé par rapport à ce plan de serrage.

13. Ensemble selon l'une quelconque des revendications 8 à 12, **caractérisé en ce que** l'ouverture centrale (24) comporte des échancrures (25) pour le passage de bossages, qui sont soit formés sur le porte-pivot (11) et serrés directement sur le module de roulement (13), soit formés sur le module de roulement (13) et serrés directement sur le porte-pivot (11).
